# EUROPEAN PATENT APPLICATION

(11) **EP 2 654 022 A1**
(43) Date of publication of application: **23.10.2013**
(21) Application number: 12164578.2
(22) Date of filing: 18.04.2012
(51) Int. Cl.: G06T 19/00

(54) **A method for monitoring and visualising process equipment in a mine**

(71) Applicant: ABB Research Ltd., 8050 Zürich (CH)
(72) Inventor: Dong, Diamond, 722 10 Västerås (SE); Jakobsson, David, 931 46 Skellefteå (SE); Lundeholm, Filip, 415 01 Göteborg (SE); Mikkelsen, Christine, 725 91 Västerås (SE); Savo, Isak, 724 71 Västerås (SE)
(74) Representative: Savela, Reino Aleksi

(57) **Abstract**

A method is disclosed for visualizing one or more processes in a mine for the purpose of process control. The method comprises retrieving information about two or more production levels (L1-L4) in the mine from a process control system (20) and/or an activity planning system. Said information comprises information about process equipment and utility equipment in the two or more production levels. The method comprises steps of retrieving information about the two or more production levels, determining or calculating a logical position of the process equipment and/or utility equipment in the two or more production levels (L1-L4), and drawing a schematic 2D diagram of each production level in a visualisation (8a, 8b, 8c). The visualisation shows each of the two or more production levels and displays the logical position of the process equipment and/or utility equipment present in the schematic 2D diagram for each of the two or more production levels. A workstation and a computer program stored on a data carrier are also described.

## Description

A method for monitoring and visualising process equipment in a mine

### TECHNICAL FIELD

The present invention is concerned with visualising process equipment and control data in a process control system. More particularly the present invention relates to a method and computer program product for process control in a mine; and with providing an improved graphical user interface in the process control system for an operator as well as to an operator workstation connected to the process control system.

### TECHNICAL BACKGROUND

In the useful lifetime of a mine a geographical map of the mine is probably the most important information that is created. It is used for long and short term planning, for the daily operation and for follow up the result of the production. It is constantly updated as the exploration of the mine progresses. Normally CAD-software is used for creating the geographical map in 3D and as much geographical information as possible is kept. The geographical information about the different parts of the mine, a tunnel, a gallery and so on is augmented with logical information about for example to which level the part belongs and if it is a transportation tunnel or ventilation shaft, production area and so on.

All the information that is today mapped to the 3D mine map is commonly static information or at least it is updated manually. The real time information that is available from ongoing processes in a mine today is not directly mapped to the 3D map. Instead it refers to geographical or logical positions in the mine. For example an air quality sensor could report the air quality in the area it is located by referring to the tunnel name. It is then up to the user of the information to interpret that information and map that information to a geographical or logical location in the mine.

From the technical area of geological surveys it is known to convert a 3D map into a 2D map. An application CN101727677, entitled Method of interconversion between two-dimensional drawing and three-dimensional model in mine model, and assigned to Ren Lingyon, from the technical domain of geological surveys, discloses methods for converting from two-dimensional (2D) drawings to a 3D CAD representation of a mine model, and also from 3D to 2D representations. According to the abstract, the method can conveniently extract a three-dimensional modelling element from a two-dimensional design result, and import the extracted data into three-dimensional modelling software to build a three-dimensional model. CN101762265, entitled Method for mutual conversion between two-dimensional view and three-dimensional view in mine model, and assigned to Che Defu, also from the domain of geological surveys, discloses similar methods. US20110074766, entitled Drawing Graphical Objects In A 3D Subsurface Environment, and assigned to Landmarks Graphics Corp., describes a system for visualizing and interpreting structures in the earth's subsurface. It also discloses viewing of a flattened (2D) representation of a geological object in a 3D environment.

US20090299703, entitled Virtual Petroleum System, and assigned to Chevron U.S.A., Inc. describes processing of geological data and more particularly a system for three-dimensional analysis and visualization of geological objects. Included is a method of stochastically modelling a formation including defining a top and a base of the formation, dividing the formation into a plurality of layers, and interpolating classifications for each of the plurality of layers. Thus conversion of 3D models or maps of geological features into 2D maps, and vice-versa, is known.

Process control in mines is often very limited even though computer based process control systems are widely used in many or most different industrial environments. Process control systems have been used in isolated parts of a process installation such as a mine, or quarry, or cement plant. Typically these processes may include an activity such as: collecting raw material by excavation, cutting, blasting or drilling and transporting it to a subsequent stage; mechanically processing material by crushing or grinding, screening or size grading; and/or processing a material to change concentration by grinding, agglomeration, blending, pelletisation or other concentration processes.

Process control systems in other industries gather and contain information about plant equipment, measurement data of one or more physical properties, process data, current and historic values for the measurement data and the process data, measured variables, trends, and so on which information is used to carry out supervision and control of processes, the production facilities and the industrial plant. The process control information of an industrial process control system is typically presented to the operators by a display screen showing a number of different process graphics that each presents process data (measurements, values), tag identifiers or an equipment ID, alarm status, connections between plant equipment, for the whole plant or installation as well as for a specific part of the process or a process section. However, in industries such as mining, mineral extraction and processing, control systems tend only to be installed for supervising and/or controlling selected equipment or processes, or systems which are relatively isolated and separate from other parts of the overall extraction process.

One reason for this is the non-static nature of mine operations. In contrast to the mining industry, in a factory or in a process in another industry such as in an oil refinery, a paper mill or a steel rolling mill, the location of all of the machinery and equipment is fixed. Thus the position of different process sections is fixed, piping and other connections in the process are fixed, and the provision of process control systems that supervise and control a complete installation with one control system monitoring and controlling a process from beginning to end is well established. Operator displays on workstations or computer terminals in the form of process graphics or other graphical interfaces typically provide displays which cover the whole installation, including each process section in the plant.

One challenge then for integrating a process control system in a mine or other processing installation for a solid raw or semi-processed material is that it is difficult to create process displays for processes in which the arrangement of equipment and process sections is not static. In a quarry, open pit mine or strip mine new roads, ramps or tunnels may be built, and others may be altered, discontinued with or destroyed. Frequently there is more than one route that may be taken in an above-ground processing installation in order to transfer material from one point, eg a storage area, to another, eg a conveyor or a crushing machine. Similarly in underground mines a mining process is typically dynamic since the mined material from one extraction or production point often does not have a single predefined route between, for example, a first cutting face and an interim storage or other parts of the mine. There may be alternative storages and there are most often alternative ways to transport the mined material to another underground level or up to the surface. Many mines have, for example, two or more hoists, serving one or more underground excavation areas, cutting faces or galleries, some of which may be located at different depths in a mine. Thus it is a challenge for a process control system to provide an overview of the whole process without the complexity of multiple routes and changes in process layout making the overview too cluttered.

The location of the raw material is known at the start of production activities. Mining and geological surveys are used to establish the presence and location of ore-bearing formations in the ground. However, the concentration and quality attributes of raw materials like metal ores in different production areas or cutting faces can vary greatly within a single mine or other installation. Also, quality parameters such as moisture content, presence of dust, contaminants and so on may vary from one location in an installation to another, for instance from one storage or stockpile to another. Further, the relative concentration of metal-bearing ore to waste material for each load or batch of raw or semi-processed material taken from the same cutting face may vary between batches. In most raw material production processes batches are transported through a number of stages until a process has reached a stage of completion, such as delivering metal ore to a concentrator line or lime to a kiln. However the individual batches that arrive at an end stage, such as a concentrator, may, depending on the process, vary greatly in respect of concentration and quality attributes.

A challenge for providing process control systems in a processing installation for a solid raw or semi-processed material is that trying to create a process view that displays all possible material flows, and/or transportation alternatives, for such a non-static process would result in a cluttered view. It would be difficult to map ongoing activities on a process view display with sufficient information to provide the operator with an effective situation awareness without causing a cluttered or overloaded information display. It is important to avoid undue clutter on a process display or process graphic used in process control. Process graphics are the mainstay of many process control systems. All of the control objects, represented by software objects, are placed in a context of one or more process graphics. The work of an operator supervising a process includes the important functions of supervising the various parts of a process, and taking control actions when necessary.

The main functions used by the operators are typically alarm management, trends, process graphics and faceplates. The majority of these functions are implemented by manipulating control objects in the process graphics. An important functionality in the control system is visualization of system status and methods or devices to highlight data that has provoked an abnormal condition. However in some situations the operator often has limited time available to make a decision. For at least this reason, it is important to avoid cluttered process displays in order that an operator is provided with only information that is necessary and relative to a monitoring and control task. It is also important to avoid clutter so as to reduce operator workload and fatigue.

The inventors have identified that there is a need for a way to visualize real time information about process events and process flow in a mine. Although 3D mine maps, or models, are available much data is mapped to it manually. It would be an advantage to be able to combine real-time information from a control system with information about device position in a mine in a way that minimises screen clutter and operator workload. The present invention addresses one or more of the above mentioned problems.

### SUMMARY OF THE INVENTION

According to a first aspect of the present invention an improvement is provided in the form of a method for visualizing one or more processes in a mine for the purpose of process control, the method comprising retrieving information about two or more production levels in the mine from a process control system and/or an activity planning system, said information comprising information about process equipment and utility equipment in the two or more production levels, the method comprising retrieving information about the two or more production levels in the mine, determining a logical position of the process equipment and/or utility equipment in the two or more production levels, drawing a schematic 2D diagram in a visualisation representing each of the two or more production levels and displaying the logical position of the process equipment and/or utility equipment present in the schematic 2D diagram for each of the two or more production levels. The schematic 2D diagram presents a simplified overview in which the logical relationships are presented without any excess information from geographical or geological information of a 3D map or model.

According to an embodiment of the invention, a method is disclosed for visualizing one or more processes in a mine for the purpose of process control, the method comprising retrieving information about two or more production levels in the mine from a process control system and/or an activity planning system, determining a logical position of the process equipment and/or utility equipment in the two or more production levels, drawing a schematic 2D diagram in a visualisation representing each of the two or more production levels and displaying the logical position of the process equipment and/or utility equipment, further comprising the step of retrieving from the process control system information about at least one item of mine equipment located in two or more of the production levels, calculating a location of the mine equipment in each of the two or more production levels and schematically displaying the logical position of the mine equipment in each respective 2D diagram.

According to another embodiment of the invention, a method is disclosed for visualizing one or more processes in a mine for the purpose of process control, the method comprising retrieving information about two or more production levels in the mine from a process control system and/or an activity planning system, determining a logical position of the process equipment and/or utility equipment in the two or more production levels, drawing a schematic 2D diagram in a visualisation representing each of the two or more production levels and displaying the logical position of the process equipment and/or utility equipment, further comprising the step of retrieving a location of an access shaft or access tunnel between two or more of the production levels and schematically displaying the logical position of an entrance to a tunnel or shaft in each of the two or more 2D diagrams.

According to an embodiment of the invention, a method is disclosed for visualizing one or more processes in a mine for the purpose of process control, the method comprising retrieving information about two or more production levels in the mine from a process control system and/or an activity planning system, determining a logical position of the process equipment and/or utility equipment in the two or more production levels, drawing a schematic 2D diagram in a visualisation representing each of the two or more production levels and displaying the logical position of the process equipment and/or utility equipment, further comprising the step of displaying an access tunnel or access shaft communicating between two or more production levels schematically as one or more lines or an elongated feature joining the two or more 2D diagrams. The simplified overview provided by the schematic 2D diagrams retains the relevant process information of logical positions and relative distances.

According to another further embodiment of the invention, a method is disclosed for visualizing one or more processes in a mine for the purpose of process control, the method comprising retrieving information about two or more production levels in the mine from a process control system and/or an activity planning system, determining a logical position of the process equipment and/or utility equipment in the two or more production levels, drawing a schematic 2D diagram in a visualisation representing each of the two or more production levels and displaying the logical position of the process equipment and/or utility equipment, further comprising the step of retrieving a location of an access unit of a ventilation unit or shaft or other utility connection between two or more production levels and schematically displaying the logical position of the ventilation unit or utility unit point in each of the two or more 2D diagrams.

According to an embodiment of the invention, a method is disclosed for visualizing one or more processes in a mine for the purpose of process control, the method comprising retrieving information about two or more production levels in the mine from a process control system and/or an activity planning system, determining a logical position of the process equipment and/or utility equipment in the two or more production levels, drawing a schematic 2D diagram in a visualisation representing each of the two or more production levels and displaying the logical position of the process equipment and/or utility equipment, further comprising the step of displaying the ventilation unit or other utility unit present in two or more production levels schematically as an elongated feature or as one or more lines joining the production levels in the two schematic 2D diagrams.

According to a preferred embodiment of the invention, a method is disclosed for visualizing one or more processes in a mine for the purpose of process control, the method comprising retrieving information about two or more production levels in the mine from a process control system and/or an activity planning system, determining a logical position of the process equipment and/or utility equipment in the two or more production levels, drawing a schematic 2D diagram in a visualisation representing each of the two or more production levels and displaying the logical position of the process equipment and/or utility equipment, further comprising the step of schematically displaying a plurality of production levels in the mine as an array of schematic 2D diagrams arranged in one or more rows or columns wherein each production level is displayed in a position in the array dependent on which one of two or more production levels is located above or below any other production level in the mine.

According to another, preferred embodiment of the invention, a method is disclosed for visualizing one or more processes in a mine for the purpose of process control, the method comprising retrieving information about two or more production levels in the mine from a process control system and/or an activity planning system, determining a logical position of the process equipment and/or utility equipment in the two or more production levels, drawing a schematic 2D diagram in a visualisation representing each of the two or more production levels and displaying the logical position of the process equipment and/or utility equipment, further comprising the step of schematically displaying a plurality of production levels in the mine as an array of simplified 2D diagrams each arranged in a position in a perspective view dependent on which one of two or more production levels is located above or below the other production level in the mine.

According to an embodiment of the invention, a method is disclosed for visualizing one or more processes in a mine for the purpose of process control, the method comprising retrieving information about two or more production levels in the mine from a process control system and/or an activity planning system, determining a logical position of the process equipment and/or utility equipment in the two or more production levels, drawing a schematic 2D diagram in a visualisation representing each of the two or more production levels and displaying the logical position of the process equipment and/or utility equipment, further comprising the step of retrieving from the process control system measurement data from at least one item of mine equipment or a sensor located in one or more of the production levels, calculating a location of the mine equipment or the sensor and schematically displaying at the logical position of the mine equipment or sensor in each respective 2D diagram any from the group of: a measurement of air quality, a measurement of an air flow, a measurement of a gas concentration, a measurement of acoustic or seismic vibrations, a motor load, a motor temperature, a quantity of material in a load or hoist, a quantity of material in a vehicle, a measurement of signal strength of a wireless transmission from a mine equipment or control object.

An important advantage of this invention is that the method is used to generate a simplified 2D (2-dimensional) map out of the 3D map (3-dimensional map). In order to simplify the map the majority of any geological information is removed and all unnecessary geographical information is removed and a minimum of geographical information is kept. This is then a similar approach to the idea of the "London subway map". That is to say that the geographical information is reduced to a minimum and that the position of points of interest (stations on each line) are arranged to show the relation of station on one rail line to any other station in a schematic way, without any information not relevant to the relative position of the first and second points of interest. This approach is the method adapted to suite the specific characteristic of a mine map.

The method may be carried out either manually or automatically, or by a combination of manual and automated actions. In principle, the main steps of this invention are:
1. Create a 3D model or augment an existing geographical 3D map with information about what control objects are placed in the mine (production point, tunnel, hoist, storage site, air sensor, ventilation shaft, etc.)
2. Augment the control objects with logical information about where in the logical structure of the mine they are located. A tunnel might for example belong to depth level 2 and to a ventilation cell B. A tunnel may also be a connection between two different depth levels.
3. Separate the 3D map into the different depth levels.
4. For each depth level - remove the geographical depth information (z component) for all objects to create a 2D map for each depth level.
5. Represent each type of control object defined in step 1 with a symbol such as simple graphical symbol. A tunnel with a line, a production point with a dot, storage with a square, etc. (these are just examples). If a mine for example has four depth levels there would after this step be four simplified 2D diagrams or maps.

a. These 2D diagrams or maps are further simplified by straightening tunnels and displaying them as only one or more preferably straight lines, and preserving only the connections between different important points in the mine. For example it might not be important for process control reasons to see all of the bends or curves in a transportation tunnel; so preferably the tunnel between two points can be represented by a straight line, but which in practice may not be straight and may also comprise more than one line.
b. Step 4 might create 2D diagrams or maps with overlapping tunnels and step 4a will also require some adjustments of the 2D maps. These modifications can either be done manually or automatically with, for example, an automatic layout algorithm.

The inventive method simplifies a geographical map of a mine. It preserves important geographical information like the approximate distance or relative distances between different production points which is important information for planning and operations. But it removes unnecessary geographical information because the exact distance and depth is not important.

According to a second aspect of the invention, a workstation of a process control system in a mine is provided, the process control system comprising computer programs adapted for carrying out process monitoring and control operations, wherein information is retrieved about two or more production levels in the mine from the process control system or an activity planning system, wherein the workstation comprises an interface for receiving measurement data of one or more physical properties relating to a process being controlled by the process control system, a display unit for displaying physical properties of the process control system to a system operator, and a display control unit configured to: retrieve information about the two or more production levels in the mine, determine a logical position of the process equipment and/or utility equipment in the two or more production levels, draw a schematic 2D diagram in a visualisation representing each of the two or more production levels in process overview of the mine and display the logical position of the process equipment and/or utility equipment present in the schematic 2D diagram for each of the two or more production levels.

In a third aspect of the invention the methods of the invention may be carried out by a computing device comprising one or more microprocessor units or computers. The computing device is arranged with access to data storage or memory means for storing one or more computer programs adapted for carrying out the improved methods for visualisation of material flow in a process control system. Preferably such computer programs contain instructions for the processor to perform the method as mentioned above and described in more detail below. The instructions may be stored on a non-transitory computer readable medium. The instructions may also be stored in volatile computer-readable memory.

### BRIEF DESCRIPTION OF THE DRAWINGS

Embodiments of the invention will now be described, by way of example only, with particular reference to the accompanying drawings in which:
FIGURE 1 shows a schematic representation of a visualization of 2D diagrams of production levels in a mine, the visualization being generated for display in a human machine interface on workstation for monitoring and controlling the process, the example showing schematically two or more production levels according to an embodiment of the invention;
FIGURE 2 is a schematic representation of the invention of

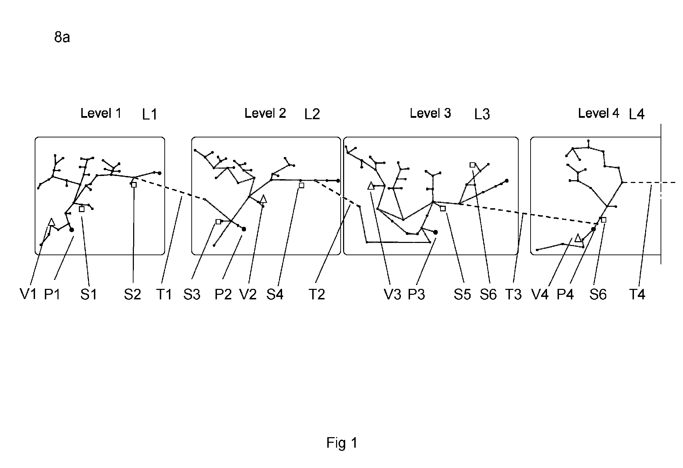

FIGURE 1 and shows in particular a visualisation of an enlarged view of one 2D diagram;

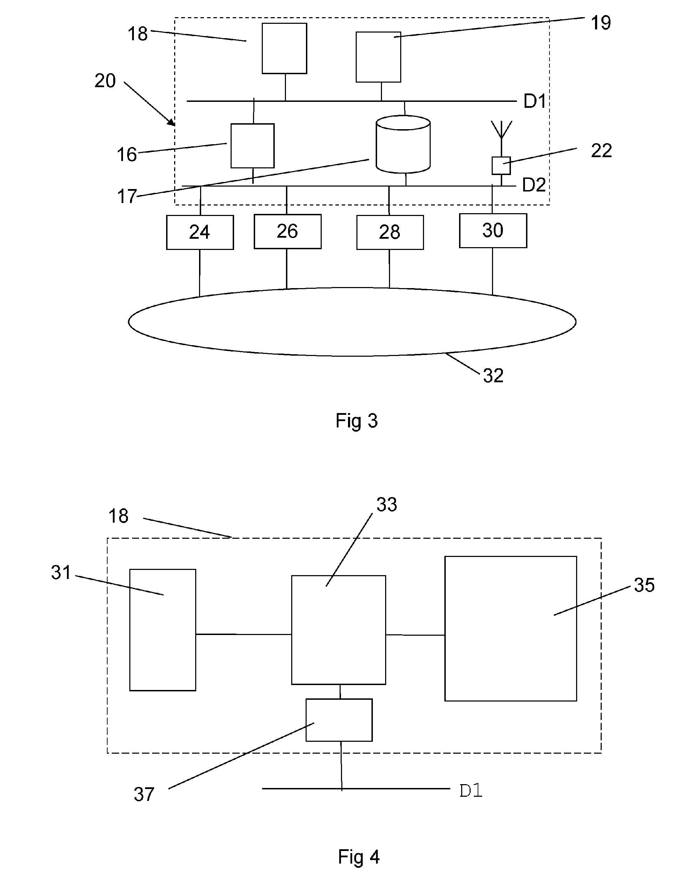

FIGURE 3 shows schematically a process control system for controlling a process such as the process of FIGURE 1, and
FIGURE 4 shows a block schematic of an operator workstation used in connection with the process control system used in the invention of FIGURE 1;

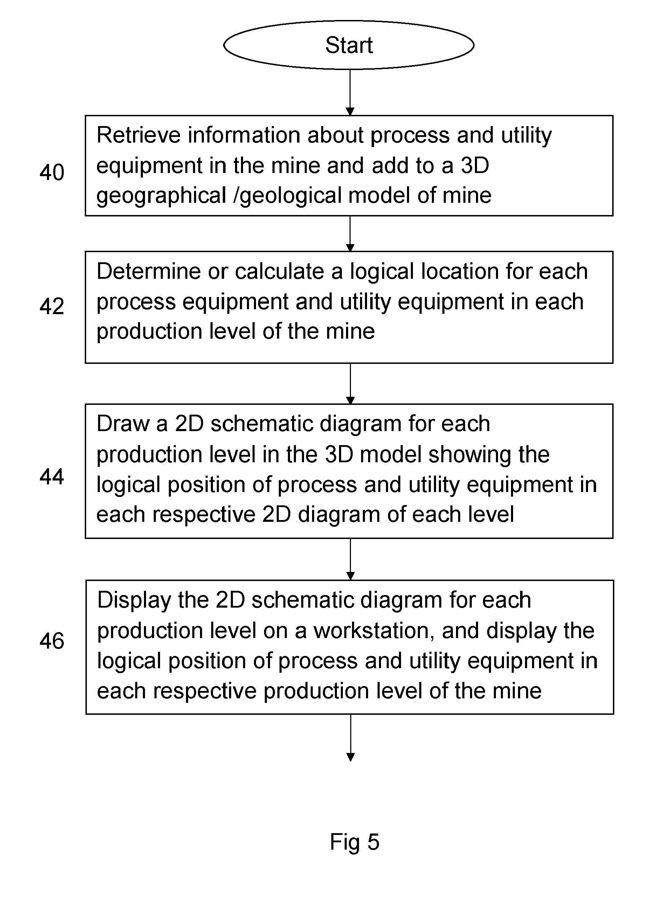

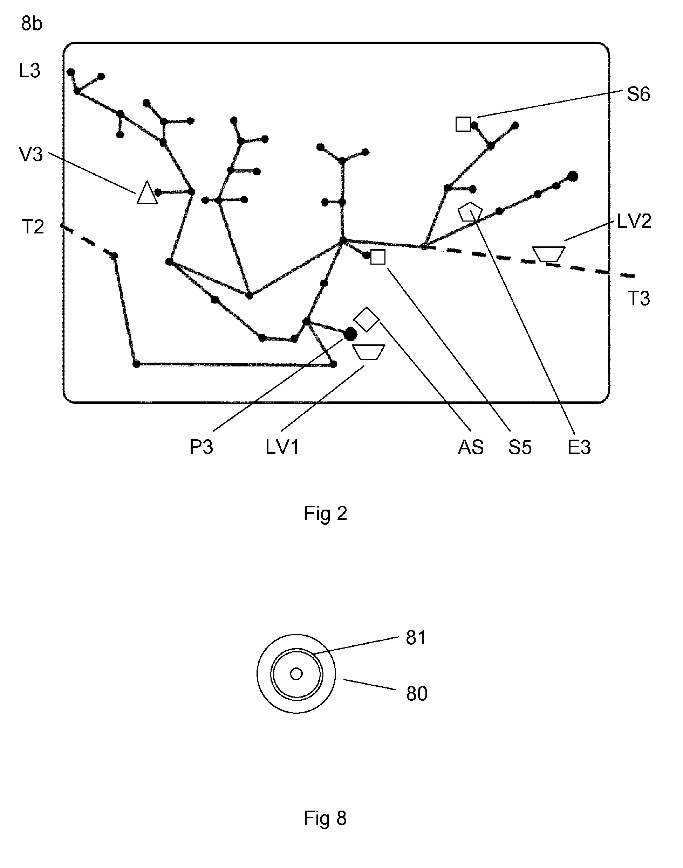

FIGURE 5 shows a flow chart for a computer program adapted for carrying out the method for providing a visualization of schematic 2D diagrams of production levels in a mine visualization according to FIGURES 1 & 2, and FIGURE 6 shows another flow chart for carrying out the method of FIGURES 1 and 2 according to another embodiment of the invention;

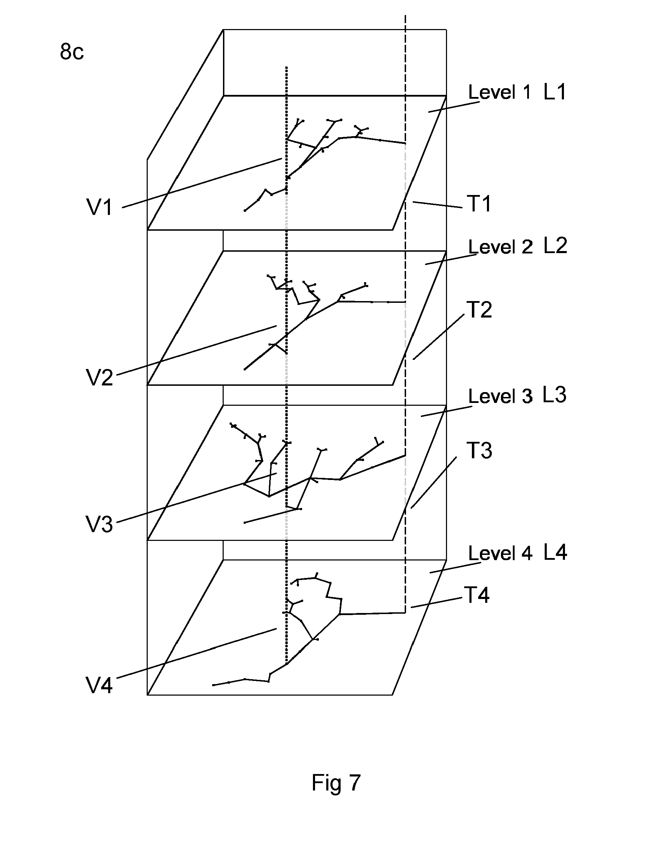

FIGURE 7 shows the invention of Figure 1 and in particular a visualisation of a perspective view,
FIGURE 8 shows a data carrier on which a computer program adapted for carrying out the method of FIGURE 1 may be stored.

### DESCRIPTION OF THE PREFERRED EMBODIMENTS

Figure 1 shows an example of a process for production of a raw or semi-finished material and a visualization 8a of the process. In this exemplary example the figure shows a number of production points P1-P4 in an underground mine. However the invention is not limited to mines and quarries but may be applied to other processes involving the handling of solid raw or semi-processed materials including for example production processes for cement, lime, fly ash, clinkers; potash, phosphate, salt, grain, sand and clay minerals; ceramic and glass materials, silica sand, cullet; bulk polymer granules. In other words, the process is with advantage a mining process, for instance the obtaining of minerals in a mine. However, the invention can also be applied in certain industrial processes such as electrical power generation, transmission and distribution processes as well as water purification and distribution processes, oil and gas production and distribution processes, petrochemical, chemical, pharmaceutical and food processes, and pulp and paper production processes. These are just some examples of processes where the system can be applied. There exist countless other processes. The process may be monitored through one or more process monitoring computers, which communicate with a server handling monitoring and control of the process.

Figure 1 shows a visualisation 8a of four production levels L1-L4. In the exemplary display shown, a 2D schematic diagram of each of the four levels is arranged in a row as they may be displayed on a display screen of a workstation of a process control system. In production level L1 there is a production point P1 and two storage areas S1, S2. Level 1 is a schematic 2D diagram, or logical representation, of a production area in a mine. Starting from diverse information sources such as geological surveys, geographical surveys, engineering drawings and CAD (computer aided design) drawings available information in 3D about all the production levels in a mine is converted into a number of schematic 2D diagrams, one for each production level. The majority of any geological information is removed, although limited, summary information regarding, for example, the logical position of different ore bodies may be retained and added back to the 2D diagrams. Unnecessary geographical information is removed, because the exact depth of the production level, and exact distance between any two points in the production level is not necessary for process control. Each route to and from each production point or other process area in the production level is simplified and shown schematically as a line, preferably a straight line (or as two or more straight lines). The logical position of process equipment in each production level is shown schematically by a symbol.

Thus in production level 1 all the paths and roads etc between excavated areas are shown, for example, as an ordinary line. A production point such as P1 is indicated in this exemplary example by a circular symbol. Level 2 shows two storage points S3, S4 and one production point P2. The storage points S1-S7 in this example are each indicated by a square symbol. A line T1 between level 1 and level 2 represents schematically the position of a tunnel between the two production levels L1 and L2. Figure 1 also shows in Level 1 a ventilation unit point V1. The ventilation unit points V1-V4 in this example are indicated by a triangle symbol. This may be a ventilation inlet, or outlet. This may also be a ventilation flow control device, flaps, or fire dampers. The ventilation unit may also, or instead, provide access to a ventilation shaft, tunnel or machine with a ventilation function, eg a fan, fire damper. As shown in Figure 1 (and in Figure 7, below) the ventilation shafts running between the production levels are shown as a line, preferably a straight line, which may be a dotted line or dashed line. The line may instead be displayed as an elongated feature that may pictorially or schematically represent a shaft, or a cable or a pipe or any other elongated form that conveys information to the reader about the nature of the link between two or more production levels. Utility units, or utility connections between levels may comprise, as well as ventilation shafts; electrical power cables or switchboards, distribution panels, substations; control and data cables or cabinets, fresh water and/or waste water piping or pumps, valves, and so on.

Sensors are arranged to measure physical parameters concerned with the process, such as sensors in a hoist or vehicle measuring a volume or weight of material to be transported. Similarly sensors may be arranged on motors powering conveyors or crushing equipment to measure or estimate amount of material or weight of material transported or crushed. Each production level is divided up into one or more ventilation cells. One or more sensors may be arranged in each ventilation cell to measure one or more indicators of air quality, such as volume of air flow per second, particle content and/or a concentration of one or more gases. The measurement and other data output from the sensors is arranged to be communicated to the process control system, which system is described below in more detail and in respect of Figure 3.

Thus Level 3 has one production point P3 and two storages S5, S6 and a ventilation unit, or ventilation shaft, V3. A tunnel or access shaft of some sort T3 is shown communicating between Level 3 and Level 4. Production Level 4 is shown to have one storage S7 and one production point P4, and a ventilation unit V4. A production point in a mine may also be called a cutting face and be one of a series of mining faces at which a raw material such as iron ore or copper ore, or coal, clay, lime, etc. is cut, drilled, blasted, dug or otherwise excavated at the cutting face.

There is a tunnel or access shaft T4 leading out of a level 4. Any type of access for physical communication between production levels, such as a tunnel, an elevator, a ramp, a shaft, a railway or a hoist may be represented schematically in this way. In the diagram of Figure 1 the tunnels T1-T4 are shown schematically as straight lines, and displayed in the visualisations as a dashed line ( - - - ) thus with a different visual indicator than the ordinary lines, preferably straight lines, representing routes within the production levels.

Figure 2 shows a enlarged view of the production level (L3) Level 3 in a visualization 8b of the process according to a preferred embodiment. In this exemplary example the figure shows one production site P3 on Level 3 in an underground mine. The figure shows the access tunnel T2 of Figure 1 on the left side of the diagram, leading to Level 2, and the other access tunnel T3 on the right side, leading to Level 4. As shown in Figure 1 there is one ventilation access point V3 and two storages S5, S6 for interim storage of raw material excavated from a production point such as P3 or semi-processed material from another storage or a crusher etc. In addition, a sensor AS is indicated with a symbol, in this case a diamond-shaped geometrical figure. The exemplary sensor is an air sensor that measures one of more parameters relevant to air quality, being any from the group of: amount of air flow (eg in cubic meters per second), moisture content, content of a gas such as carbon monoxide, carbon dioxide, oxides of nitrogen (NOx) or any other gas relevant to air quality or toxicity.

The logical positions of two loader vehicles, LV1, LV2 are visualised in this visualisation. Vehicle LV1 is shown at production site P3 where it may be involved in loading raw material. The second vehicle LV2 is in a logical position inside the access tunnel LV2 and may be travelling into, or out of, Level 3. The figure also shows an Emergency Room E3 or Emergency Shelter. This room is provided as an emergency shelter room for people working in Level 3 and in the near vicinity, for example at production site P3 or a Storage point S5 or S6. The emergency shelter E3 is equipped with supplies etc necessary in case of emergency, food, water, first aid supplies and so on according to relevant industrial standards. It is also provided with communication equipment, telephones, radios, emergency telephone equipment, and so on. The emergency shelter may be arranged as a portable room which is moved and re-positioned in a production level from time to time, as necessary, when a cutting face is not in use or a new production point is begun.

The logical position of emergency room E3 is shown on the visualisation provided by the process control system. An inspection of the visualisation 8b of Level 3 shows then that there are people working with vehicles in positions shown by LV1 and LV2. In case of emergency, an operator or engineer using the process control system can see approximately how far away the people in vehicles LV1, LV2 are from the shelter room E3. The operator can also see, upon pointing to the air sensor AS or making another computer input, what the current values for parameters related to air quality are at position AS or another air/gas sensor position. The operator or engineer can also see the logical location of the nearest ventilation access point V3 in Level 3 to the people in either vehicles LV1, LV2 or people who may be in the emergency room E3, or planning to go there. The operator or engineer can carry out any necessary control measures using the process control system to control ventilation in Level 3, for example via the ventilation access equipment V3.

The line between any two stages within a production level such as shown in Figures 1, 2 may be displayed as a plain solid black or coloured line on a display. Optionally, and in particular when a more complex flow is visualized, a line representing a particular material flow, for example one material type in a mine where more than one type of raw material occurs, may be drawn using a line with a particular visual indicator, eg a double line or a semi-transparent line, for example to show a different material type or even a planned material flow.

Thus an operator has a process overview of a number of different production levels that are all part of a mining process. On each production level the process sections are represented schematically so that the relative position of an active production point, for example P2, Level 2, and the nearest storages which are S3, S4 in Level 2, and S2 in Level 1 which may be reached by the tunnel T1. The operator can see in real time which, for example, the nearest alternative storage points are in a simplified process representation with the minimum of effort.

The display is an un-cluttered display as any unnecessary geographical information present in a 3D model has been removed. The exact geographical position of each process point or item of process equipment is, by default, not shown, in order to minimise clutter. However, the logical position of each process stage and process equipment is shown, and that is what is needed by the operator to supervise the process. In the common situation where a mine has production levels that are arranged with more than one tunnel, shaft and/or hoist communication between the production levels, the improved visualisation provides an operator or a process engineer with an immediate overview of the position of, say the nearest storages eg S2, S3, S4 to a production point of interest eg P2. Likewise information in the form of symbols display information such as of alternative routes such as a hoist or a tunnel between a production point and a storage, or a further process stage, such as a crusher, information which may be conveyed to an operator in one visually simple overview.

Figure 3 shows a process control system in which the methods of the invention are applied and the visualisations produced and displayed on one or more workstations. Figure 3 shows schematically a control system 20 for a process 32, i.e. a process control system. The process 32 is, for example, a process in a mine or a quarry. This form of process control may furthermore be any of a number of different types of processes handling a raw material or a semi-processed raw material such as a first metal ore, a second metal ore, high grade ore, low grade ore, non-metallic minerals, stone, sand, limestone, lime, cement, slag, gangue, mining waste and so on. The visualization may optionally be used to visualize a material such as mining waste or other low value material that may be removed from a cutting face or a crusher, stored and at some stage transported for burial or backfill at a disused cutting face or other suitable place.

The control system 20 may for instance be an object-based computerised system for controlling the process 32, a system such as the 800xA system supplied by ABB. An activity planning system may be implemented as an add-on module or application that can access the history database 17 of the process control system. Preferably such an activity planning system can also access sensor data or other data direct from the control system or via process interface units (24-30). The process control system includes a material tracking function as an add-on module or as an integrated application, or a plug-in or as part of the control system. In Figure 3 the process control system 20 includes a number of operator workstations or terminals 18 and 19 connected to a first data bus D1. There is furthermore a second data bus D2 between the first and second busses that is connected to a server 16 providing control and monitoring of the process 32. Second data bus D2 is also connected to a database 17 where data, such as historical data relating to control and monitoring of the process 32, including production data each batch of raw material produced or processed at each stage, is stored. A wireless access point 22 or wireless interface enables wireless communication from sensors etc to be received by the process control system via data bus D2. This may take the form of a WLAN or wireless LAN, and may use a protocol such as WiFi or WirelessHART or another suitable wireless communication protocol, including any technology or protocol from the technical field of mobile phones. A network manager arranged with the wireless access point monitors all of the wireless transmitters that are joined to the network, and that later join or leave the network.

To the second data bus D2 there are furthermore connected process interface units 24, 26, 28 and 30 for providing control of the process and for receiving measurement data from the process 32. Measurement data from the process is provided from sensors placed on process equipment such as the hoists, loader vehicles, transporter vehicles, conveyor equipment, ventilation equipment and so on. Sensors for measuring seismic activity, for example vibration or acoustic vibration sensors may be arranged at suitable positions in the mine. In addition measurement data of important parameters for determining air quality, such as air temperature and air flow rate is collected from one or more sensors in ventilation cells in each production level. One or more gas sensors may be provided as needed for detection of gases or a specific gas, such as, but not limited to combustible gases such as Methane, CH₄; and polluting or poisonous gases such as a compound of Sulphur, or the gases Carbon Monoxide, CO, Carbon Dioxide, CO₂, NOₓ, particularly in areas where vehicles such as LV1, LV2; or other equipment fitted with an internal combustion engine are operating. In the figure there are provided four such process interface units 24, 26, 28, 30 that interface the process 32.

It should however be realized that there may be more or fewer of each of these interface units. It should here also be realized that some of these may only be provided for control, some only for measurements and some for both control and measurements. It should be realized that one or more of sensor units placed at storages S1-S7, at the production points P1-P4, arranged at one or more crushers and one or more sensors arranged at the hoists, and the sensors monitoring air quality in the ventilation cells in the production levels L1-L4 may be connected to such process interface units. Such units are thus all involved in controlling the process 32 and in doing this also involved in measuring physical properties related to the process. The measured properties may here be properties of the process itself such as a weight of a load of metal-bearing ore, or a weight of another raw material in a storage such as S1 or S2. The measured properties may be other data relevant for monitoring and control of the process of operating parameters such as motor temperature, motor speed, motor voltage and/or current from process equipment such as a crusher, a conveyor belt, a hoist, and parameters such as payload weight or geographical position from a vehicle, which is typically transmitted wirelessly from a truck to a control system wireless receiver or a wireless access point (22 in Figure 3). The process interface units 24, 26, 28, 30 may also provide information on properties or status of vehicles in the process. One or more wireless nodes or wireless access points, wireless repeaters or a wireless base station or another wireless receiving interface may be used to measure wireless signal strength for any mine equipment or process device, such as a loader vehicle or a transport truck, or a from sensor or other item monitored by the process control system, that is to say, any control object, so as to identify the position in the production level (L1-L4) of the control object based on the measurement, or based on a number of measurements, of wireless signal strength. The wireless access point 22 is arranged with hardware and software necessary for making measurements and/or estimates of signal strength from distant transmitters such that distance to a moving object, such as a vehicle such as LV1 or LV2 may be measured and calculated or estimated.

Preferably this is begun automatically when transmissions are first detected, which may be when a vehicle enters Level 3, for example, and continues until transmissions are no longer received, which may be when the vehicle leaves the production level. Thus real time data is made available to show the logical position or approximate position of any vehicle or equipment with a wireless transmitter connected to a wireless network in a production level and connected to the process control system.

It is advantageous that the visualisation provides an interface in the process control system which functions in a very simple and intuitive way. This enables an operator to evaluate the information in more quickly and in a less-fatiguing way. First, simply by selecting and activating an equipment icon, a link to information held by the process control system is activated. Thus by means of the process control system and, for example interface units 24, 26, 28, 30 selecting or activating a control object on the visualization such as one of the a cutting faces or production points P1-P4 or a storage S1-S7, a crusher or a hoist, a ventilation cell in a production level and so on, measured physical parameters and stored historical data, including data about air quality, may be accessed, retrieved and displayed to the operator or process engineer. The control object may be visualized as a truck icon, cutting face icon, an icon for a storage hopper and so on. This information about the process, such as production sequence records, a motor speed of a crusher, a motor speed of a loading vehicle, motor speed and/or load of a ventilation fan, motor speed of a truck and so on is used by the operator for monitoring and control purposes or a process engineer for engineering, calibration, configuration and so on.

Thus measurement data from items of mine process or utility equipment, crusher, conveyor, vehicle, ventilation fan etc. or from a sensor such as a gas sensor, temperature sensor etc located in one or more of the production levels, are retrieved by the process control system 20 and schematically displayed at the logical position of the mine equipment or sensor in each respective 2D diagram on a workstation. In particular a measurement may be pre-determined for display: continuously; or when reaching or exceeding a certain predetermined value; or only on demand; and may be any from the group of: a measurement of air quality, measurement of volume of air flowing past a measurement point, concentration of a specific gas, a motor load, a motor speed, a motor temperature, a quantity of material in a load or hoist, a quantity of material in a vehicle.

Figure 4 shows an operator workstation 18 in a process control system 20 that includes a user input unit 31, a display unit 35, a display control unit 33 and an interface 37 for communicating with the other parts of the process control system 20 via the first data bus D1. An operator workstation 18 or 19 provides a graphical user interface for an operator of the system, with which process graphics, such as the present visualization, and other human machine interface screens for monitoring or controlling a process may be displayed. The control unit 33 may comprise a processor with an associated program memory including program code for performing the functionality of the present invention. The display unit 35 may be any suitable display unit, such as a liquid crystal display, plasma display, LED or OLED (organic light emitting diode) or CRT device. The user input unit 31 is a unit through which a user of the operator workstation 18, i.e. an operator, may enter data. As such it may be a keyboard, a keypad or a mouse or other data input device. The user input unit 31 may also be combined with the display unit in order to together form a touch screen. The touch screen may be arranged as a multi-touch apparatus with a resistive or capacitive-type touch and display surface.

The methods of the invention may also be carried out using a server application on the process control system side, such as a web server, together with a thin client such as a web browser software running on the workstation side. One such implementation is described in a patent US8, 126, 964 entitled Method for Displaying Data in an Industrial Control System, and assigned to ABB Research Ltd. A thin client is a program run by the computer of the workstation, which is not required to be resource intensive since most of the computing calculation work is done on another, normally remote computer, a server machine. This may be a server machine such as data server 16 in Figure 3. Using a client-server implementation has advantages in particular when it comes to providing the visualization in a graphical user interface on a remote workstation or portable computer, notebook, PDA, smart phone or other portable computing device. The methods may also be implemented in a similar way using applications of the process control system running in a cloud and providing computing power to thin client or web browser applications running on a fixed or portable workstation.

The operator workstation or terminal 18 may also include other user interfaces such as a camera for recognizing gesture commands, a speaker or a microphone for registering spoken commands in order to present and receive data to and from one or more users of the operator terminal in other ways than through the display unit. The unit may for example be arranged with sensors and software suitable for receiving gesture-based commands, as well or instead of commands by means of touching or sweeping fingers on a touch screen or instructions input via a computer mouse and so on.

Data from the various process interfaces such as 24, 26, 28, 30 can be collected and stored in a history data base 17 as well as presented in real-time to an operator via the display unit 35. The production history and sensor measurement of physical parameters, recorded during processing of each of the batches is stored in the databases connected to the process control system. The operator workstation 18 in the process control system 20 may present data regarding the process in a number of different ways. Primarily process information is presented in a series of process graphics, as described previously. It may present the process through a number of interconnected process control units, which process control units may include process interface units. However they may also include other units where the process is carried out but no measurements are being made or no control is carried out.

Along with these units the operator terminal may furthermore display data relating to the process, to air quality in a ventilation cell, as well as to the process control units, such data may be measurement data of a physical property of the process and/or of process interface units. The data may also include data of a physical property that has been derived from a measured physical property. The data may furthermore include status data of various units in the system. The measurements are here typically measurements obtained at discrete and equidistant consecutive points in time, i.e. as data samples of the process in a real time production process.

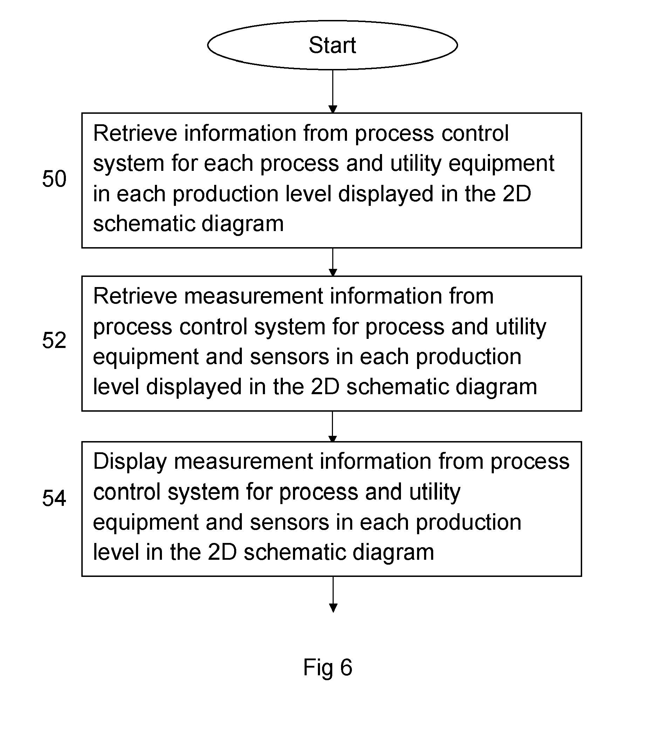

Figures 5 and 6 show flow charts of one or more methods for carrying out the method of the invention of Figure 1. Figure 5 shows a flowchart for a computer program that is adapted for carrying out method steps including:
40. Retrieve information about process and utility equipment in the mine and add to a 3D geographical /geological model of mine;
42. Determine or calculate a logical location for each process equipment and utility equipment in each production level of the mine
44. Draw a 2D schematic diagram for each production level in the 3D model showing the logical position of process and utility equipment in each respective 2D diagram of each level
46. Display the 2D schematic diagram for each production level on a workstation, and display the logical position of process and utility equipment in each respective production level of the mine.

In step 42 the logical location for each equipment may be determined by translating information or coordinates from the 3D map into locations in the schematic 2D diagrams. This may be done using manual methods, modelling, calculations, computerised calculations or any combination of those methods.

Thus as summarised in Figure 5 a number of 2D diagrams are generated from a 3D model or map. The 2D diagrams schematically show the logical position of all the control objects, productions points, storages, ventilation access points or ventilation shafts on a visualisation of a process control system.

Figure 6 shows a flowchart for a computer program that is adapted for carrying out method steps including:
50. Retrieve information from process control system for each process and utility equipment in each production level displayed in the 2D schematic diagram
52. Retrieve measurement information from process control system for process and utility equipment and sensors in each production level displayed in the 2D schematic diagram
54. Display measurement information from process control system for process and utility equipment and sensors in each production level in the 2D schematic diagram.

Thus for each of the control objects (P1-P4, S1-S7, V1-V4, LV1, LV2, E3, AS) the control system collects measured data such that measurements of real time values may be displayed for each control object in the visualisation. As described previously in relation to Figure 3 the real time values, or values derived from them may, for each control object depending on a predetermined or preconfigured setting, are displayed continuously; or when reaching or exceeding a certain predetermined value; or only on demand.

Figure 7 shows another arrangement of the 2D diagrams of the visualisation 8c of Figure 1. The figure shows four production levels, L1-L4, arranged in a perspective view and in an order of depth at which each level is located. A ventilation shaft is shown, indicated as a straight, dotted line that runs between all of the levels L1-L4 at the ventilation access points V1-V4. The advantage of this visualisation of 2D diagrams of production levels is that the relative depth of each production level is very easily communicated. Similarly, the physical access tunnels T1-T4 are shown schematically with a straight, dashed line linking eg tunnel T3 linking Level 3 and Level 4. The visualisation 8c provides an operator or engineer with information about the relative distance between control objects on the production levels such as utility access points (V1-V4) or physical access points (T1-T4); or about production points (P1-P4) and storage sites (S1-S7).

The information about the relative depth of each production level 2D diagram is provided by a simple to read, diagrammatic and un-cluttered display.

The methods of the invention may, as described herein, be carried out by means of one or more computer programs comprising computer program code or software portions running on a computer or a processor. The microprocessor (or processors) comprises a central processing unit CPU performing the steps of the method according to one or more methods of the invention. The invention is performed with the aid of one or more said computer programs, adapted for carrying out the method of the invention such as the methods flowcharted in Figures 5-6, which are stored at least in part in memory and as such accessible by the one or more processors. The or each processor may be in a memory storage unit of a process system control unit or a PLC (Programmable Logic Controller) or other system part thereof, in a local or distributed computerised control system. It is to be understood that said computer programs may also be run on one or more general purpose industrial microprocessors or computers instead of one or more specially adapted computers or processors.

The computer program comprises computer program code elements or software code portions that make the computer perform the method using equations, algorithms, data, stored values and calculations previously described. A part of the program may be stored in a processor as above, but also in a ROM, RAM, PROM, EPROM or EEPROM chip or similar memory means. The program in part or in whole may also be stored on, or in, other suitable computer readable medium such as a magnetic disk, or a non-transitory computer readable medium such as a CD (compact disc) or a DVD (digital versatile disc), stored on a hard disk, magneto-optical memory storage means, in volatile memory, in flash memory, as firmware, stored on a data server or on one or more arrays of data servers. One such data carrier 80 in the form of a CD ROM disk with a computer program 81 carrying such computer program code is schematically shown in Figure 8.

The person skilled in the art realizes that the present invention by no means is limited to the examples described above. On the contrary, many modifications and variations are possible within the scope of the appended claims.

## Claims

1. A method for visualizing one or more processes in a mine for the purpose of process control, the method comprising retrieving information about two or more production levels (L1-L4) in the mine from a process control system (20) and/or an activity planning system, said information comprising information about process equipment and utility equipment in the two or more production levels, **characterised by** retrieving information about the two or more production levels (L1-L4) in the mine, determining a logical position of the process equipment (VL1, VL2) and/or utility equipment (V1-V4, T1-T4) in the two or more production levels, drawing a schematic 2D diagram in a visualisation (8a, 8b) representing each of the two or more production levels and displaying the logical position of the process equipment and/or utility equipment present in the schematic 2D diagram for each of the two or more production levels.

2. A method according to claim 1, **characterised by** retrieving from the process control system information about at least one item of mine process or utility equipment located in two or more of the production levels (L1-L4), calculating a location of the mine equipment in each of the two or more production levels and schematically displaying the logical position of the mine process (LV1, LV2) or utility equipment (V1-V4, T1-T4) in each respective 2D diagram.

3. A method according to any one previous claim, **characterised by** retrieving a location of an access shaft or access tunnel between two or more of the production levels and schematically displaying the logical position of an entrance to a tunnel (T1-T4) or shaft in each of the two or more 2D diagrams.

4. A method according claim 3, **characterised by** displaying an access tunnel (T1-T4) or access shaft communicating between two or more production levels schematically as one or more lines joining production levels in the two or more 2D diagrams.

5. A method according to claim 1, **characterised by** retrieving a location of an access unit of a ventilation unit or shaft (V1-V4) or other utility connection between two or more production levels and schematically displaying the logical position of the ventilation unit or utility unit point in each of the two or more production levels in the 2D diagrams.

6. A method according claim 5, **characterised by** displaying the ventilation unit (V1-V4) or other utility unit present in two or more production levels schematically as an elongated feature or one or more lines joining the production levels in the two schematic 2D diagrams.

7. A method according to claim 1, **characterised by** schematically displaying a plurality of production levels (L1-L4) in the mine as an array of schematic 2D diagrams arranged in one or more rows or columns wherein each production level is displayed in a position in the array dependent on which one of two or more production levels is located above or below any other production level in the mine.

8. A method according to claim 1, **characterised by** schematically displaying a plurality of production levels in the mine as an array of simplified 2D diagrams (L1-L4) each arranged in a position in a perspective view (8c) dependent on which one of two or more production levels is located above or below the other production level in the mine.

9. A method according to claim 1 or 2, **characterised by** retrieving from the process control system (20) measurement data from at least one item of mine equipment (LV1, LV2) or a sensor (AS) located in one or more of the production levels, calculating a location of the mine equipment or the sensor and schematically displaying at the logical position of the mine equipment or sensor in each respective 2D diagram (L1-L4) any from the group of: a measurement of air quality, a measurement of an air flow, a measurement of a gas concentration, a measurement of acoustic or seismic vibrations, a motor load, a motor temperature, a quantity of material in a load or hoist, a quantity of material in a vehicle, a measurement of signal strength of a wireless transmission from a mine equipment or control object (LV1, LV2).

10. A computer program product on encoded on a non-transitory computer readable medium comprising computer program code configured to, when said program code is loaded into a workstation provided in a process control system, carry out the steps of a method according to any one of claims 1-9.

11. A workstation (18, 19) of a process control system in a mine, the process control system (20) comprising computer programs adapted for carrying out process monitoring and control operations, wherein information is retrieved about two or more production levels (L1-L4) in the mine from the process control system (20) or an activity planning system, **characterised in that** the workstation comprises an interface (37) for receiving measurement data of one or more physical properties relating to a process (32) being controlled by the process control system (20), a display unit (35) for displaying physical properties of the process control system to a system operator, and a display control unit (33) configured to: retrieve information about the two or more production levels in the mine, determine a logical position of the process equipment and/or utility equipment in the two or more production levels, draw a schematic 2D diagram in a visualisation (8a, 8b) representing each of the two or more production levels and display the logical position of the process equipment and/or utility equipment present in the schematic 2D diagram for each of the two or more production levels.

12. A workstation according to claim 11, **characterised in that** the workstation is configured to retrieve from the process control system information about at least one item of mine equipment located in two or more of the production levels (L1-L4), calculate a location of the mine equipment in each of the two or more production levels and schematically display the logical position of the mine equipment (V1-V4, LV1-LV2) in each respective 2D diagram.

13. A workstation according to claim 11, **characterised in that** the workstation is configured to retrieve a location of an access shaft or access tunnel (T2, T3) between two or more of the production levels and schematically display the logical position of an entrance to a tunnel or shaft in each of the two or more 2D diagrams.

14. A workstation according to claim 13, **characterised in that** the workstation is configured to display an access tunnel (T1-T4) or access shaft communicating between two or more production levels schematically as one or more lines joining the production levels in the two or more 2D diagrams.

15. A workstation according to claim 11, **characterised in that** the workstation is configured to retrieve a location of a ventilation unit or shaft (V1-V4) or other utility connection between two or more production levels and schematically display the logical position of the ventilation unit (V1-V4) or utility unit point in each of the two or more 2D diagrams.

16. A workstation according to claim 15, **characterised in that** the workstation is configured to display the ventilation unit point(V1-V4) or other utility unit present in two or more production levels schematically as an elongated feature or one or more lines joining the two production levels in the simplified 2D diagrams.

17. A workstation according to claim 11, **characterised in that** the workstation is configured to display a plurality of production levels (L1-L4) in the mine as an array of schematic 2D diagrams arranged in one or more rows or columns wherein each production level is displayed in a position in the array dependent on which each production level is positioned above or below another production level in the mine.

18. A workstation according to claim 11, **characterised in that** the workstation is configured to display a plurality of production levels in the mine as an array of simplified 2D diagrams (L1-L4) each arranged in a position in a perspective view (8c) dependent on which one of two or more production levels is located above or below the other production level in the mine.

19. A workstation according to claim 11, **characterised in that** the workstation is configured to retrieve from the process control system (20) measurement data from at least one item of mine equipment (LV1-LV2) or a sensor (AS) located in one or more of the production levels, calculate a location of the mine equipment or the sensor and schematically display at the logical position of the mine equipment or sensor in each production level in each respective 2D diagram (L1-L4) a measured value for any parameter from the group of:
a measurement of air quality, a measurement of a gas concentration, a measurement of an air flow, a measurement of acoustic or seismic vibrations, a motor load, a motor temperature, a quantity of material in a load or hoist, a quantity of material in a vehicle, a measurement of signal strength of a wireless transmission from a mine equipment or control object (LV1, LV2).
